# EUROPEAN PATENT APPLICATION

(11) **EP 4 678 483 A1**
(43) Date of publication of application: **14.01.2026**
(21) Application number: 25188701.4
(22) Date of filing: 10.07.2025
(51) Int. Cl.: B60R 16/037

(54) **METHOD AND APPARATUS FOR CONTROLLING CABIN, ELECTRONIC DEVICE, VEHICLE, AND COMPUTER PROGRAM PRODUCT**

(30) Priority: 10.07.2024 CN 202410925207
(71) Applicant: Cariad (China) Co., Ltd., Beijing 100028 (CN)
(72) Inventor: LIN, Nan, Beijing, 100028 (CN); REN, Xinhui, Beijing, 100028 (CN); YAO, Renjie, Beijing, 100028 (CN); FEI, Fei, Beijing, 100028 (CN)
(74) Representative: Müller-Boré & Partner Patentanwälte PartG mbB

(57) **Abstract**

The present disclosure relates to a method and an apparatus for controlling a cabin, a device, a vehicle, and a product. The method comprises determining, on the basis of a current scenario of a vehicle, candidate configurations for a plurality of components within the cabin. The method further comprises adjusting the candidate configurations on the basis of safety constraint information of the vehicle and input information from a user. The method further comprises controlling, on the basis of the adjusted candidate configurations, corresponding components within the cabin. In this way, personalized and unified cabin control can be provided to the user while ensuring safety.

## Description

### Technical Field

The present disclosure relates to the technical field of vehicles, and more particularly, to a method and an apparatus for controlling a cabin, a device, a vehicle, and a product.

### Background

With the continuous development of intelligent vehicles, people's demands for vehicles have shifted from merely conventional driving and transportation functions to the pursuit of more intelligent and human-centered driving and riding experience. For example, users can rest, sing, or work in the vehicle according to their personal requirements. It can be understood that the vehicle is equipped with various intelligent devices, each offering different functions to the user, thereby transforming the vehicle into a comfortable space capable of meeting diverse user application requirements.

### Summary

Embodiments of the present disclosure propose a method and an apparatus for controlling a cabin, a device, a vehicle, and a product.

In a first aspect of the present disclosure, a method for controlling a cabin is provided. The method comprises determining, on the basis of a current scenario of a vehicle, candidate configurations for a plurality of components within the cabin. The method further comprises adjusting the candidate configurations on the basis of safety constraint information of the vehicle and input information from a user. The method further comprises controlling, on the basis of the adjusted candidate configurations, corresponding components within the cabin.

In a second aspect of the present disclosure, an apparatus for controlling a cabin is provided. The apparatus comprises a candidate configuration determination unit, configured to determine, on the basis of a current scenario of a vehicle, candidate configurations for a plurality of components within the cabin. The apparatus further comprises an adjustment unit, configured to adjust the candidate configurations on the basis of safety constraint information of the vehicle and input information from a user. The apparatus further comprises a control unit, configured to control, on the basis of the adjusted candidate configurations, corresponding components within the cabin.

In a third aspect of the present disclosure, an electronic device is provided. The electronic device comprises: one or more processors; and a storage apparatus configured to store one or more programs which, when executed by the one or more processors, cause the one or more processors to execute the method according to the first aspect of the present disclosure.

In a fourth aspect of the present disclosure, a vehicle is provided. The vehicle comprises a plurality of audio sensors and the electronic device according to the third aspect of the present disclosure.

In a fifth aspect of the present disclosure, a computer-readable storage medium is provided. The computer-readable storage medium has computer-executable instructions stored thereon which, when executed by a processor, cause the processor to execute the method according to the first aspect of the present disclosure.

In a sixth aspect of the present disclosure, a computer program product is provided, which is tangibly stored on a computer-readable medium and comprises machine-executable instructions which, when executed, implement the method according to the first aspect of the present disclosure.

It is to be understood that what is described in the Summary is not intended to limit key or important features of the embodiments of the present disclosure, nor is it intended to limit the scope of the present disclosure. Other features of the present disclosure are readily understood from the following description.

### Brief Description of the Drawings

The described and other features, advantages, and aspects of embodiments of the present disclosure are becoming more apparent in combination with the drawings and with reference to the following detailed description. In the drawings, the same or similar reference numerals indicate the same or similar elements, wherein:
FIG. 1 shows a schematic diagram of an example environment in which a plurality of embodiments of the present disclosure may be implemented;
FIG. 2 shows a schematic diagram for controlling a cabin according to some embodiments of the present disclosure;
FIG. 3 shows a flowchart of a method for controlling a cabin according to some embodiments of the present disclosure;
FIG. 4 shows a schematic diagram of an interactive interface displaying candidate configurations according to some embodiments of the present disclosure;
FIG. 5 shows a schematic diagram for generating a configuration according to some embodiments of the present disclosure;
FIG. 6 shows a block diagram of an apparatus for controlling a cabin according to some embodiments of the present disclosure; and
FIG. 7 shows a block diagram of a device capable of implementing a plurality of embodiments of the present disclosure.

### Detailed Description of the Embodiments

Embodiments of the present disclosure are described in more detail below with reference to the drawings. While certain embodiments of the present disclosure are shown in the drawings, it is to be understood that the present disclosure may be implemented in various forms and is not to be construed as being limited to the embodiments set forth herein. Rather, these embodiments are provided to facilitate a more thorough and complete understanding of the present disclosure. It is to be understood that the drawings and embodiments of the present disclosure are solely for illustrative purposes and are not intended to limit the scope of protection of the present disclosure.

In the description of the embodiments of the present disclosure, the term "comprise" and similar terms are to be understood as open inclusion, that is, "include, but are not limited to". The term "on the basis of" is to be understood as "at least in part on the basis of". The term "one embodiment" or "the embodiment" is to be understood as "at least one embodiment". The terms "first", "second", and the like may refer to different or the same objects. Other explicit and implicit definitions may also be comprised below.

As described above, users have varying demands for vehicles in different application scenarios. However, as the components within the vehicle cabin are not efficiently integrated or intelligently controlled, users cannot control a plurality of components simultaneously via a single command or interface. For example, when a user wants to take a nap inside the vehicle, they need to adjust the seat position and angle, the air conditioning temperature, and the opening or closing of the windows. In this process, the user needs to manually operate each component, which is time-consuming and laborious, resulting in poor user experience.

In the related art, simple control logic can be established according to user control, whereby a certain action is triggered when a specific condition is met. For example, when the user makes a certain gesture, the air conditioning can be turned on. However, such trigger-chain logic is relatively simple and cannot meet the diverse application requirements of users in multiple scenarios, resulting in poor user experience.

To this end, the embodiments of the present disclosure propose a method for controlling a cabin. In the embodiments of the present disclosure, the method comprises determining, on the basis of a current scenario of a vehicle, candidate configurations for a plurality of components within the cabin. The method further comprises adjusting the candidate configurations on the basis of safety constraint information of the vehicle and input information from a user. In addition, the method further comprises controlling, on the basis of the adjusted candidate configurations, corresponding components within the cabin. In this way, configurations that meet the requirements for controlling the plurality of components within the cabin can be determined according to scenarios corresponding to the vehicle. In this process, configurations that may pose safety risks or cause user discomfort can be adjusted by combining user feedback with relevant vehicle information, ensuring that the settings of the components within the cabin neither affects driving safety nor causes inconvenience to the user, thereby enhancing the driving and riding experience of the user while ensuring safety and comfort throughout the driving process.

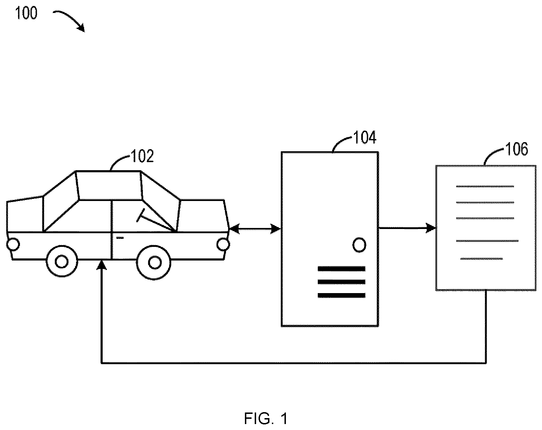

FIG. 1 shows a schematic diagram of an example environment 100 in which a plurality of embodiments of the present disclosure may be implemented. As shown in FIG. 1, the environment 100 comprises a vehicle 102 and a processor 104 communicatively connected to the vehicle. The vehicle 102 may refer to any type of motorized or non-motorized vehicle capable of carrying people and/or objects and being mobile. As shown in FIG. 1, the vehicle 102 is illustrated as an automobile. It is to be understood that although the vehicle 102 is illustrated as an automobile in FIG. 1, this is merely exemplary and the present disclosure is not limited thereto. Examples may further comprise passenger buses, trucks, motorcycles, electric vehicles, and the like. It is also to be understood that the embodiments of the present disclosure are applicable to other transportation vehicles beyond the vehicle. The processor 108 may be implemented as various devices with computing capabilities (e.g., service terminals, user terminals, etc.).

According to the embodiments of the present disclosure, the vehicle 102 may be provided with multiple types of sensors configured to collect multimodal data. For example, the vehicle 102 may comprise a plurality of sensors distributed at various locations of the vehicle 102, such as inside the vehicle, on the vehicle body, and outside the vehicle. For example, the sensors may comprise visual sensors (also referred to as optical cameras or video cameras), audio sensors, global positioning system (GPS) sensors, and the like. The visual sensors are configured to collect a plurality of images of the surrounding environment of the vehicle 102, for example, front images, rear images, left-side images, right-side image, etc. of the vehicle 102. The global positioning system sensors may be configured to estimate the geographic location of the vehicle 102.

In some embodiments of the present disclosure, the audio sensor may be configured to collect audio data from within the cabin and from the surrounding environment of the vehicle 103. For example, the audio data may comprise conversation voices of occupants within the cabin, horn sounds from other vehicles, engine sounds of the host vehicle, and the like. In some embodiments of the present disclosure, the multimodal data may further comprise data from a vehicle control unit and driving data of the vehicle. It is to be noted that the multimodal data may further comprise data received by the vehicle 102 that is transmitted by roadside units or other devices. In some embodiments of the present disclosure, the data collected by the sensors may comprise information such as the driving route, speed, acceleration, etc., of the vehicle 102 in the driving process. The multimodal data typically comprises data from the sensors of the vehicle (such as cameras, radar, speed sensors, etc.), as well as data from user interactions (such as touch screens, voice control, mobile applications, etc.). In other embodiments, the multimodal data may further comprise environmental data of the vehicle's surroundings, such as weather, air humidity, season, and the like, providing the system with comprehensive information about the cabin environment.

In some embodiments of the present disclosure, the current scenario of the vehicle 102 may be determined according to the multimodal data. The current scenario refers to the situation in which the vehicle 102 is located. This scenario is not limited to the conventional driving scenarios of the vehicle 102 (such as objects or weather in the surrounding environment of the vehicle 102), but can also, to some extent, reflect the user's requirements and status. For example, the current scenario of the vehicle 102 may comprise an acceleration scenario, an entertainment scenario, a parking and resting scenario, a working scenario, and the like. In some embodiments of the present disclosure, the current scenario of the vehicle 102 may be determined on the basis of the multimodal scenario data using a predefined model or algorithm. In one example, when the vehicle speed continuously increases and the acceleration is relatively high, the vehicle 102 may be in an acceleration scenario; when the user frequently interacts with the entertainment system, the vehicle 102 may be in an entertainment scenario; and when the vehicle remains stationary at a location for an extended period and in-vehicle sensors detect prolonged user inactivity, the vehicle 102 may be in a parking and resting scenario.

In some embodiments of the present disclosure, after determining the current scenario of the vehicle 102, the processor 104 may determine a corresponding candidate configuration 106 according to the current scenario. The candidate configuration 106 may comprise parameter sets, each of which may comprise operating parameters for the plurality of components within the cabin. It can be understood that, to achieve unified control of the components within the cabin and provide users with an intelligent cabin atmosphere, a plurality of configuration sets (e.g., a plurality of preset parameter sets) may be pre-established. Each configuration set can provide a cabin atmosphere suitable for different scenarios or tailored to different user requirements. A configuration set comprises parameters for the plurality of components within the cabin, such as operating parameters for the air conditioning (e.g., cooling mode and temperature set to 26 degrees Celsius), operating parameters for the seat (e.g., seat angle and seat position), and operating parameters for the windows (e.g., whether the window is open, and the degree of opening). In some embodiments of the present disclosure, a configuration set corresponding to a preset scenario of the vehicle and user behavior pattern may be established according to the preset scenario and the user behavior pattern. The plurality of configuration sets may comprise configurations for an acceleration scenario, a parking and resting scenario, and an entertainment scenario. In some embodiments of the present disclosure, a configuration may comprise a plurality of operating parameters for a plurality of components within the cabin, wherein the plurality of operating parameters form a parameter set.

In some embodiments of the present disclosure, the processor 104 may adjust the candidate configurations 106 according to safety constraint parameters of the vehicle and input information from the user, so as to adjust configurations that may pose safety risks or cause user discomfort. This ensures that the settings of the components within the cabin do not affect driving safety, so that the finally determined candidate configurations 106 better align with the user preferences while maintaining safety and comfort.

In this way, configurations for controlling the components within the cabin can be determined according to the current scenario of the vehicle, thereby achieving real-time adjustment of the cabin environment and providing users with more comfortable and convenient driving and riding experience. In addition, by adjusting the configurations according to relevant vehicle information or user feedback, unsafe factors or elements undesirable to the user can be avoided in the configurations, thereby ensuring that the final adjusted cabin atmosphere is safer while meeting user requirements.

A schematic diagram of an example environment 100 in which embodiments of the present disclosure may be implemented is described above with reference to FIG. 1. It is to be understood that the environment 100 is merely illustrative and is not intended to limit the scope of the present disclosure. The environment 100 may comprise additional assemblies not shown in FIG. 1, and the assemblies in the environment 100 may also be implemented in different ways.

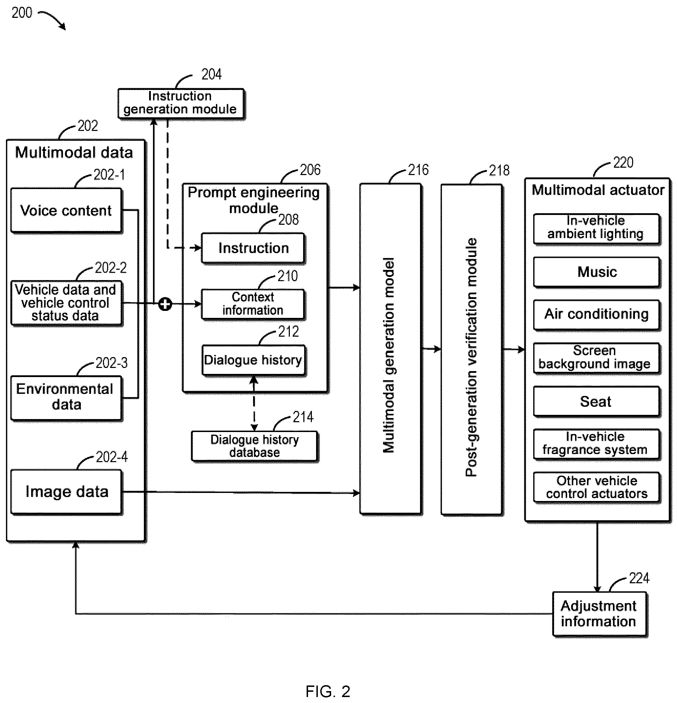

A schematic diagram for controlling a cabin according to an embodiment of the present disclosure is described below with reference to FIG. 2. As shown in FIG. 2, blocks 202 to 224 may represent a process of generating preset configurations for controlling a plurality of components within the cabin on the basis of the multimodal data 202. It can be understood that this process may involve pre-establishing a plurality of sets of preset configurations according to historical multimodal data and using the process shown in FIG. 2, and storing same in the vehicle or on other cloud servers. The corresponding configuration is invoked according to the vehicle's scenario. In other embodiments of the present disclosure, blocks 202 to 224 may also represent a process of generating configurations in real time according to the current scenario of the vehicle. For example, after the vehicle collects the multimodal data 202, a multimodal generation model 216 is used to directly generate configurations for controlling the plurality of components. Hereinafter, illustration is made by taking the direct generation of configurations for controlling the plurality of components as an example.

As shown in FIG. 2, the multimodal data 202 may comprise data of multiple modalities, including but not limited to voice content 202-1, vehicle data and vehicle control status data 202-2, environmental data 202-3, and image data 202-4. The voice content 202-1 may comprise conversation content of occupants within the cabin, multimedia audio, sounds emitted by vehicle control units such as air conditioning, as well as audio data from the surrounding environment, such as sounds from other vehicles (horn sounds and tire noise), pedestrians, animals, water, rain, and the like. In some embodiments of the present disclosure, the vehicle data and vehicle control status data 202-2 refer to signal data related to the vehicle and the vehicle control unit, and may comprise, for example, current sensor data of the vehicle, control parameters, and related in-cabin status data. In one example, the vehicle data and vehicle control status data 202-2 may include, but are not limited to, vehicle data (such as speed, acceleration, steering angle, etc. of the vehicle) and vehicle control units (such as windows, doors, seat sensors, thermometers, window sensors, etc.).

In some embodiments of the present disclosure, the environmental data 202-3 may comprise data from the surrounding environment of the vehicle, such as weather, season, temperature, humidity, wind speed, and the like. The image data 202-4 refers to image data collected by the visual sensors of the vehicle, such as vehicle cameras, from inside and outside the vehicle, providing visual information about the number of occupants and their motions and postures, as well as the external environment. In some embodiments of the present disclosure, the image data may be collected image sequences, or key frame image data in video data.

In some embodiments of the present disclosure, the multimodal data 202 may be sent to an instruction generation model 204. The instruction generation model 204 may comprise a predefined manual instruction library and determine an instruction 208 related to the multimodal data 202 according to retrieval rules (e.g., keyword-based retrieval, scenario label-based retrieval, etc.). It can be understood that the manual instruction library may comprise multiple instruction templates for different scenarios and user requirements. In other embodiments of the present disclosure, the instruction generation model 204 may further comprise a generative model, which can generate the corresponding instruction 208 according to the multimodal data 202.

In one example, the instruction 208 may be "As an intelligent vehicle assistant, you can generate an intelligent in-vehicle atmosphere according to real-time input data". Step 1: Receive various types of input forms (comprising user voice demand, in-vehicle monitoring, vehicle status, environment perception, and other information); Step 2: Interpret the current scenario of the vehicle and generate the most suitable cabin atmosphere to provide a comfortable, safe, and personalized in-vehicle environment; Step 3: Return the corresponding results in the data formats required by the respective actuators. The contents of the input information form are summarized as follows: <xxxxxxx>. It can be understood that the instruction 208 is essentially a trigger instruction that can issue commands in place of the user. In other words, the vehicle can independently generate instructions to control the cabin, thereby providing an intelligent cabin atmosphere for the user even when no commands are issued by the user. In some embodiments, the instructions may provide explicit semantic directions to the multimodal generation model 216, directing the multimodal generation model 216 to generate explicit results.

In some embodiments of the present disclosure, after the instruction generation module 204 generates the corresponding instruction 208, the instruction 208 may be input to a prompt engineering module 206. On the basis of the instruction and other information, the prompt engineering module 206 generates prompt information (e.g., prompts) for the multimodal generation model 216, enabling the multimodal generation model to accurately comprehend the user intent and the current scenario of the vehicle, and generate a final result according to the prompt information. In some embodiments of the present disclosure, the prompt engineering module 206 may generate corresponding prompts by combining the instruction 208, context information 210, and dialogue history 212.

In some embodiments of the present disclosure, the context information 210 may comprise voice content, environmental data, image data, etc., on which the configuration determined in the previous cycle or the preset configuration is based. Additionally, the context information may be multimodal data collected during the previous cycle. It can be understood that using context information as a basis for generating prompts enables the multimodal generation model to more accurately comprehend the current scenario of the vehicle. The dialogue history 212 may comprise previous inputs of the user (e.g., content entered via voice input or the like), such as the adjustment requested by the user in the last interaction or the generation intent indicated in the previous instance. In some embodiments of the present disclosure, the dialogue history 212 may be obtained from a dialogue history database 214, which can be stored either within the vehicle or on a cloud server communicatively connected to the vehicle.

It can be understood that prompts refer to the text input to the multimodal generation model 216, and serve to prompt or guide the multimodal generation model 216 to generate outputs that meet the desired expectations. In some embodiments of the present disclosure, the prompt engineering module 206 may be configured with a generative pre-trained model. The generative pre-trained model is a machine learning or deep learning model trained using data for text generation. In some embodiments, the generative pre-trained model may be fine-tuned to enable the generative pre-trained model to perform various natural language processing tasks, such as prompt generation, text generation, and the like.

In some embodiments of the present disclosure, upon receiving the prompt, the multimodal generation model 216 may generate a corresponding configuration according to the prompt. The configuration comprises a plurality of operating parameters for the plurality of components within the cabin, such as air conditioning, windows, doors, entertainment system, ambient lighting, and the like. For example, the temperature within the cabin can be determined according to weather data. In hot summer seasons, the system can lower the air conditioning temperature and increase the fan speed; and in cold winter seasons, the system can raise the air conditioning temperature and activate the seat heating function. By combining weather data with seasonal data, it can be determined whether the current environment requires adjustment of air humidity to determine the air conditioning parameters. For example, in dry winter seasons, the system can increase the air humidity to enhance occupant comfort.

In some embodiments of the present disclosure, to make the generated results of the multimodal generation model 216 more accurate and better aligned with user preferences, and to avoid safety risks comprised in the generated results, a post-generation verification module 218 may be used to verify the generated results of the multimodal generation model 216. For example, preset verification strategies may be employed to verify the generated results. In some embodiments of the present disclosure, the verification strategies may comprise various aspects, such as vehicle signal strategies determined according to vehicle engineering and safety, as well as constraint parameters and parameter ranges preset according to user requirements. In other embodiments, the generated result may also be verified by providing same to the user and evaluating the user's acceptance level and opinions (e.g., the input information from the user). The user may have the control authority to authorize or reject the final generated result, thereby avoiding inconvenience or risks arising from the immediate activation of control over candidate configurations.

In some embodiments of the present disclosure, the verified candidate configurations may be sent to a multimodal actuator 220 in formats permitted by the components within the cabin. The multimodal actuator 220 is a key module that connects to the control units of the components within the cabin, executes the verified parameter sets, and converts same into actual control actions. The multimodal actuator 220 can adjust components within the cabin, such as in-vehicle ambient lighting, air conditioning, seats, screen background images, music, in-vehicle fragrance system, or other vehicle control actuators. The control systems within the cabin are interconnected via hardware, and execute parameter instructions in the verified parameters via the in-vehicle bus or corresponding communication protocols, thereby achieving intelligent adjustment of the in-cabin atmosphere. For example, in one example, the control system corresponding to the ambient lighting may receive ambient parameters comprised in the verified configuration and adjust the operating parameters of the ambient lighting according to the ambient parameters, such as brightness, color, and dynamic effects. The control system corresponding to the air conditioning may receive air conditioning parameters comprised in the verified configuration and adjust the temperature, fan speed, airflow direction, mode, and the like according to the air conditioning parameters.

It can be understood that, after the parameters of the plurality of components within the cabin are controlled according to the configuration, the user may decide to adjust the parameters of one or more components in the configuration according to personal requirements. For example, after the seat angle is adjusted according to the configuration, if the user feels uncomfortable, they may provide feedback on adjustment information 224 by inputting information via voice input, gesture input, or other means. For example, the adjustment information input may be "The seat angle is uncomfortable, please readjust." The multimodal generation model 216 may adjust the generated result or regenerate the configuration according to the adjustment information. For example, the adjustment information 224 may serve as part of the multimodal data 202, providing a reference basis for the multimodal generation model 216 to adjust or generate configurations for controlling the plurality of components.

In this way, configurations for controlling the components within the cabin can be generated according to the current scenario of the vehicle and user requirements, and the generated configurations can be verified. This ensures that the cabin atmosphere created by controlling the components according to the final configuration better aligns with the user preferences while maintaining safety, thereby enhancing the driving and riding experience of the user.

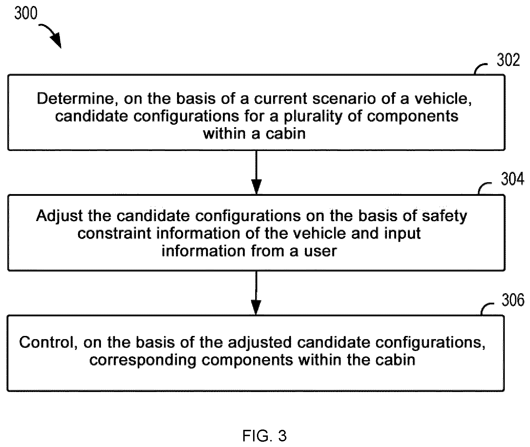

FIG. 3 shows a flowchart of a method 300 for controlling a cabin according to some embodiments of the present disclosure. The method 300 may be executed by the processor 104 shown in FIG. 1. In addition, with the continuous development and innovation of intelligent vehicles, an increasing number of vehicles are equipped with computing capabilities (e.g., intelligent vehicles). That is, the method 300 according to the embodiments of the present disclosure is not limited to being executed at the processor 104, and may also be executed at the vehicle 102, which is not limited in the present disclosure.

At block 302, the method 300 comprises determining, on the basis of a current scenario of a vehicle, candidate configurations for a plurality of components within the cabin. The current scenario refers to the situation in which the vehicle is located, which may comprise the vehicle's scenario and the behavior patterns of the occupants inside the vehicle. In some embodiments of the present disclosure, the current scenario may be determined according to the multimodal data collected or acquired by the vehicle. The multimodal data may be collected using multiple types of sensors disposed in the vehicle, such as audio sensors, visual sensors, speed sensors, and the like. The multimodal data comprises data of multiple modalities and may include, but is not limited to, audio data, image data, and vehicle data and vehicle control status data. In some embodiments of the present disclosure, the audio data may comprise external vehicle audio data (e.g., surrounding environmental sounds), vehicle body audio data (e.g., engine sounds), in-cabin audio data (e.g., human voice content within the cockpit), and the like. The image data may comprise images within the cabin (e.g., images comprising occupants) and image data of the surrounding environment of the vehicle (e.g., image data collected in front of or behind the vehicle). The vehicle data and vehicle control status data may be signal data related to the vehicle and the vehicle control unit, which may include, but are not limited to, speed and acceleration of the vehicle, cockpit sensor data, door information, window sensor data, and the like.

In some embodiments of the present disclosure, the vehicle's scenario may comprise external environment scenarios and internal environment scenarios. The external environment scenario may include, but is not limited to, weather conditions (such as sunny, rainy, snowy, etc.), temperature, humidity, traffic conditions (e.g., congestion status, duration of congestion, congested road segments), types of roads traveled, and the like. The internal environment scenario of the vehicle may comprise the status of the vehicle (e.g., speed, acceleration, steering angle, braking status, open/closed status of doors and windows, etc.) as well as the status of the occupants (e.g., behaviors, physiological state, emotional states, etc.). In some embodiments of the present disclosure, the status of the occupant may be determined on the basis of recognition results obtained by performing image recognition on collected images comprising the occupant. In some embodiments of the present disclosure, the physiological state of the occupant (e.g., the driver or passenger), such as heart rate and respiratory rate, monitored by in-vehicle sensors, may be used to indirectly infer the occupant's emotional state or comfort level. It can be understood that by analyzing the occupant's voice commands, facial expressions, movements, and the like, it is possible to determine whether the user is fatigued, distracted, or in a pleasant state.

In some embodiments of the present disclosure, the current scenario may comprise multiple types of combinations, such as a driving scenario plus occupant fatigue, a non-driving scenario plus occupant resting, a driving scenario plus occupant working, a driving scenario plus occupant entertainment, or the like. In different scenarios, users' requirements for the components within the cabin differ. In some embodiments of the present disclosure, preset configurations corresponding to different scenarios may be pre-constructed according to scenario data. The preset configurations may comprise operating parameters for the components within the cabin. The components within the cabin can be configured to create a cockpit atmosphere, providing occupants with comfortable driving and riding experience. For example, a preset current scenario may comprise operating parameters for the air conditioning, ambient lighting, entertainment system, and the like.

In some embodiments of the present disclosure, after constructing preset configurations according to different scenarios, a correlation between the preset configurations and the preset scenarios may also be established. This correlation can be represented in multiple forms, such as tables, functions, models, and the like. In some embodiments of the present disclosure, the preset configurations and the correlation between the preset configurations and preset scenarios may be stored either within the vehicle or on a cloud server communicatively connected to the vehicle. After determining the current scenario of the vehicle, candidate configurations corresponding to the current scenario can be determined from among a plurality of preset configurations according to the correlation above. It can be understood that preset scenarios with a similarity to the current scenario meeting a certain threshold and preset configurations corresponding to the preset scenarios, can be determined according to the similarity between the current scenario and the preset scenarios. The determined preset configurations may then be used as candidate configurations.

At block 304, the method 300 comprises adjusting the candidate configurations on the basis of safety constraint information of the vehicle and input information from a user. The safety constraint information of the vehicle may comprise vehicle signal protection rules established on the basis of vehicle dynamics (e.g., acceleration, deceleration, steering, braking, and other performance) or safety requirements. For example, the safety constraint information may comprise restrictions such as prohibiting window opening during high-speed driving, specifying permissible adjustment ranges for seat angles, and the like. For example, the safety constraint information may specify that when adjusting parameters such as seat position and angle, the changes of the parameters accommodate drivers of different heights while maintaining the optimal comfort. The safety constraint information may also specify that when adjusting parameters related to acceleration and braking, the changes in the parameters do not affect the acceleration and braking distances of the vehicle. In some embodiments of the present disclosure, the input information from the user may comprise feedback on the candidate configuration, such as acceptance or not, acceptance level, parameters requiring adjustment, and the like. For example, the input information from the user may specify that the air conditioning temperature cannot exceed 29 degrees Celsius, the seat angle cannot exceed 150 degrees, and the like. In some embodiments of the present disclosure, parameters in the candidate configuration that do not comply with the preset verification strategy may be adjusted accordingly according to the verification strategy. For example, if the candidate configuration specifies an air conditioning temperature of 30 degrees Celsius, the temperature may be adjusted to 29 degrees Celsius or another value below 29 degrees Celsius. The preset verification strategy may comprise verification strategies constructed on the basis of ergonomically defined component parameters, user configuration information, and the like.

At block 306, the method 300 comprises controlling, on the basis of the adjusted candidate configurations, corresponding components within the cabin. The operating parameters of the components within the cabin are adjusted according to the operating parameters comprised in the configuration. For example, the adjusted candidate configuration may be sent to the control system of the corresponding component, which adjusts the operating parameters of that component accordingly. In one example, the seat-related operating parameters comprised in the configuration are sent to the seat adjustment system, causing the seat to move backward by 5 centimeters.

In this way, configuration information for controlling the components within the cabin can be determined according to the scenario of the vehicle, thereby achieving real-time adjustment of the cabin environment and providing users with more comfortable and convenient driving and riding experience. In addition, by adjusting the configurations according to relevant vehicle information or user feedback, unsafe factors or elements undesirable to the user can be avoided in the candidate configurations, thereby ensuring that the final adjusted cabin atmosphere is safer while meeting user requirements.

In some embodiments of the present disclosure, to ensure that the components ultimately controlled provide a cockpit atmosphere preferred by the user and to avoid causing a poor user experience after cabin control, the user's acceptance level of the candidate configuration and desired adjustments may be determined by actively querying the user after the candidate configuration is determined. The user may choose whether to adjust the parameters in the candidate configuration according to personal requirements. In some embodiments of the present disclosure, the adjustment intent of the user can be determined according to the input information from the user. The adjustment intent refers to the parameters and parameter values that the user wants to adjust for the determined candidate configuration. For example, the user may input information via voice input, touch screen input, gesture recognition, and the like. In one example, the user can input information through the in-vehicle voice assistant. For example, the user may say, "Please adjust the seat to a more rearward position". In some embodiments of the present disclosure, after determining the parameter the user intends to adjust and the adjusted parameter value corresponding to the parameter, the parameter value for the parameter in the candidate configuration may be adjusted to the corresponding adjusted parameter value. In some embodiments of the present disclosure, when adjusting parameters according to the adjustment intent of the user, a feedback mechanism may be established to promptly provide clear prompts and suggestions if the user attempts operations that do not comply with requirements.

In this way, the user can be provided with the capability to edit the candidate configuration, making the adjusted candidate configuration better aligned with the user requirements and preferences, thereby ensuring that the final cockpit environment provided satisfies the user expectations and preferences.

In some embodiments of the present disclosure, the adjustment intent of the user may involve modifying the operating parameters for a specific component in the candidate configuration. If a plurality of adjustments still do not satisfy the user requirements or preferences, the adjustment intent of the user may be to regenerate the configuration. During the process of regenerating the configuration, the multimodal generation model (e.g., multimodal generation model 216 shown in FIG. 2) may generate a plurality of parameters corresponding to a plurality of components according to the method described in the embodiments above. For example, the multimodal generation model can generate the corresponding configuration on the basis of the scenario of the vehicle. After generating the configuration, it is also necessary to verify the generated configuration using relevant vehicle information and user feedback to determine whether the configuration meets the requirements.

In some embodiments of the present disclosure, the plurality of preset configurations may be generated by the multimodal generation model on the basis of multimodal data collected by the vehicle. For example, the multimodal generation model may generate a preset parameter set comprising a plurality of parameters on the basis of multimodal data, context information, or other information. Different preset configurations correspond to different vehicle scenarios. In some embodiments of the present disclosure, the user may customize operating parameters of components within the cabin to determine preset configurations. For example, the user may generate a preset configuration by determining the operating parameters of components within the cabin according to usage scenarios and historical driving trajectories of the vehicle.

In some embodiments of the present disclosure, to increase user involvement in the cabin control process, a function allowing the user to configure preset configurations or candidate configurations can be provided via an interactive interface or other means. For example, the user can input configuration information according to personal requirements to help the multimodal generation model generate preset configurations that better satisfy the requirements. In one example, the user suffers from lumbar disc disease and has specific requirements for the seat angle. To reduce intervertebral disc pressure, it is desired that the seat angle be adjustable to between 95 and 105 degrees. The user can input personal requirements via voice input or text input. According to the input information from the user, instruction tokens can be generated (e.g., "the seat angle range is 95 to 105 degrees"). On the basis of the prompt, the multimodal generation model can generate parameters corresponding to the seat component and satisfy the requirements.

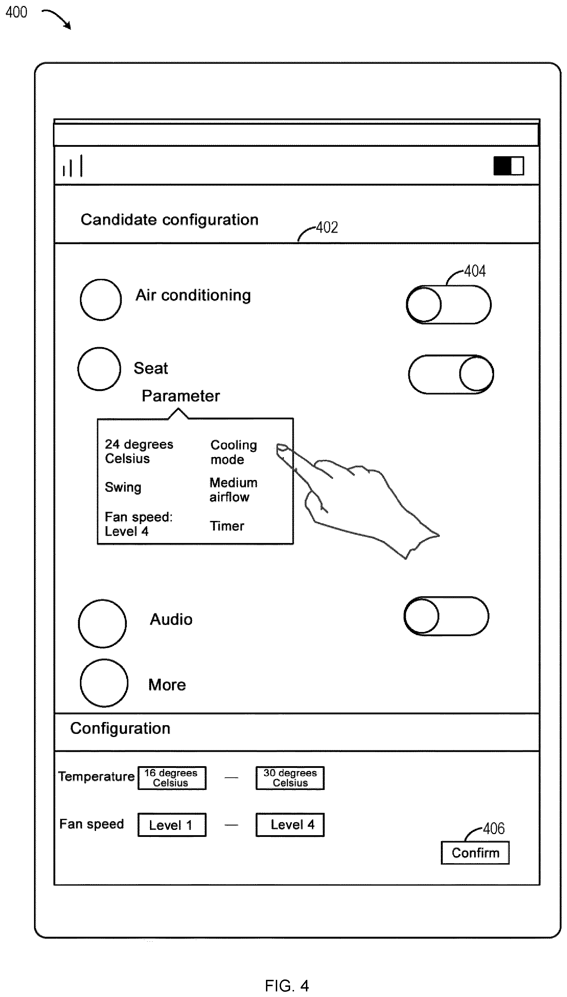

FIG. 4 shows a schematic diagram of an interactive interface displaying candidate configurations according to some embodiments of the present disclosure. As shown in FIG. 4, the interactive interface 402 comprises a plurality of display assemblies 404, a selection button 406, and a confirmation control 408. The plurality of display assemblies 404 are configured to display a plurality of components in the candidate configuration and parameters corresponding to the plurality of components. The user can review the parameters comprised in the candidate configuration and select the parameters of components that need to be adjusted according to personal requirements. In some embodiments of the present disclosure, after making selections, the user can choose whether to press the selection button 406 according to personal requirements. In response to pressing the selection button 406, options for configuring the parameters of the components can be provided to the user. The user adjusts the parameters of the components according to personal requirements and decides whether to press the confirmation control 408. The confirmation control 408 can be activated by triggering a triggering event to perform the corresponding response. The triggering event may comprise mouse clicks, user finger taps, and the like. The confirmation control 408 may be implemented as a button control, which may comprise text-labeled buttons, icon-only buttons, and the like. In response to the trigger operation of the user, the parameters modified by the user and the corresponding parameter values can be obtained, and the adjusted candidate configuration can be determined.

In some embodiments of the present disclosure, certain operations are prohibited from being performed by the vehicle under different scenarios. For example, seat adjustment is prohibited when the vehicle is traveling at a high speed, to ensure driver safety; likewise, opening the sunroof is not allowed under rainy or snowy conditions. On this basis, to ensure the safety of the parameters comprised in the candidate configuration and in consideration of the safety performance of the vehicle, the determined candidate configuration may be verified to confirm whether the parameters comprised in the candidate configuration meet safety performance requirements and whether their execution is allowed. In some embodiments of the present disclosure, the permission to execute operations corresponding to the parameters in the candidate configuration is judged according to environmental sensor data and data from other sensors, such as speed sensors of the vehicle. If the operation is not permitted, the corresponding parameter in the candidate configuration is directly removed. By integrating environmental sensor data and other sensor data of the vehicle into the safety judgment of parameters, the compliance of parameters in the candidate configuration with safety performance requirements can be determined more accurately, and appropriate measures can be taken when necessary to ensure the safe operation of the vehicle.

In some embodiments of the present disclosure, if the operating parameters of certain components exceed normal values, driving safety may be affected. For example, driving safety may be affected when the seat angle is excessively reclined or the audio volume is too high. On this basis, safety constraint values may be set for one or more components within the cabin according to the safety performance of the vehicle. The safety constraint value can be set by the user on the basis of a comprehensive consideration of vehicle design, ergonomics, safety regulations, and the like. In some embodiments of the present disclosure, when it is determined that a parameter in the candidate configuration exceeds the safety constraint, the parameter may be adjusted accordingly. The adjustment method may involve direct adjustment; for example, the safety constraint value for the seat angle is 150 degrees, and the audio volume is 70%. In cases where the seat angle parameter comprised in the candidate configuration is 155 degrees or the audio volume is 80%, the parameters for the seat component or the audio component in the candidate configuration can be adjusted according to the corresponding safety constraint values. For example, the seat angle parameter may be adjusted to 150 degrees or less, or the audio volume may be adjusted to 70% or lower. The specific adjustments may be made comprehensively by combining other factors, such as the adjustment intent of the user. If the user's intent is to recline the seat further to achieve a better resting experience, but the adjusted angle exceeds the safety constraint value, the system may adjust the seat angle as close as possible to the user's expectation while ensuring safety. For example, the seat angle may be adjusted to a safe value close to 150 degrees.

In this way, it can be ensured that the final parameters used to control components within the cabin comply with safety requirements, thereby avoiding potential unforeseen risks for the user and enhancing the driving and riding experience of the users while ensuring vehicle safety.

In some embodiments of the present disclosure, the real-time status of the vehicle may affect the setting of certain parameters. For example, when the vehicle is traveling at a high speed, opening the windows or the sunroof may affect driving safety. On this basis, vehicle signal protection rules may also be determined according to the real-time status of the vehicle, and the parameters requiring adjustment and the corresponding parameter values, may be determined on the basis of these signal protection rules. For example, when the measured vehicle speed exceeds a certain threshold, opening the windows or sunroof may increase aerodynamic drag and affect the driving stability. Therefore, the signal protection rules may be triggered, for example, limiting the opening degree or opening angle of windows or the sunroof. The signal protection rules may be customized according to different vehicle models, different configurations, and even individual driver habits.

In some embodiments of the present disclosure, the candidate configurations may also be verified according to user configuration information. For example, the user may preset certain parameters according to personal preferences. A user verification strategy may be formed according to the user configuration information. According to the user verification strategy, one or more parameters in the candidate configuration may be adjusted to ensure that the parameters in the candidate configuration do not conflict with the user preferences. For example, if the user has preset the maximum audio volume to 60%, and the candidate configuration specifies an audio volume parameter of 80%, an adjustment to the volume parameter is required (e.g., lowering the volume). In this way, the rationality and safety of parameter adjustments in the candidate configuration can be ensured.

In some embodiments of the present disclosure, the candidate configuration may be adjusted using a preset verification strategy. The types and contents of verification strategies are diverse. When adjusting parameters in the candidate configuration, the verification results of each verification strategy need to be considered. If any verification result fails to meet the requirements, the operation corresponding to the parameters in the candidate configuration cannot be executed. When adjusting one or more parameters in the candidate configuration, all verification strategies need to be considered to avoid the situation that the adjusted candidate configuration comprises one or more parameters that do not satisfy any of the verification strategies.

In this way, the basis for adjusting the candidate configuration can be determined from a plurality of aspects, thereby making the adjusted candidate configuration safer and better aligned with user preferences.

In some embodiments of the present disclosure, if a plurality of adjustments still fail to meet the requirements (for example, if the user's acceptance level of the candidate configuration remains below a normal value), the multimodal generation model may regenerate configurations for controlling a plurality of components according to the multimodal data. For example, the multimodal generation model can generate configurations for controlling the plurality of components within the cabin according to the vehicle's scenario data and the user's characteristic data, thereby ensuring that the resulting cabin atmosphere better aligns with the user requirements.

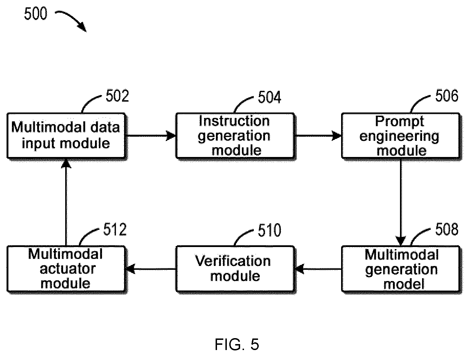

FIG. 5 shows a schematic diagram for generating a configuration according to some embodiments of the present disclosure. As shown in FIG. 5, a multimodal data input module 502 may be configured to collect and obtain multimodal data according to instructions from the vehicle or the user. The multimodal data may comprise voice content, environmental data, image data, and the like. The multimodal data may be input to the instruction generation module 504, which may utilize a generative pre-trained model to generate instruction tokens, or select instruction tokens corresponding to the multimodal data from a predefined manual instruction library. The instruction tokens provide explicit semantic directions to the multimodal generation model, directing the multimodal generation model to generate explicit results. The instruction tokens can be input to a prompt engineering module 506, which integrates multiple types of input data. By leveraging instruction tokens, context information, and dialogue history, the prompt engineering module 506 generates corresponding prompt information to ensure that the multimodal generation model accurately comprehends the user requirements, thereby providing data support for the flexible and personalized adjustment of the components within the cabin.

In an embodiment of the present disclosure, the prompt information can be input to the multimodal generation model 508, which may generate adjustment parameters for the components within the cabin in a unified manner according to the prompt information. The generated adjustment parameters are input to a multimodal actuator module 512 within the cockpit space according to the specified signal format and communication protocol. It can be understood that the multimodal actuator module 512 is connected to the control units of the components within the cockpit, executes the adjustment parameters output by the multimodal generation model 508, and converts same into actual control actions. For example, the ambient light can receive the ambient light parameters output by the multimodal generation model 508 and adjust the brightness, color, and dynamic effects of the ambient lighting within the cabin. The seat can receive the adjustment parameters (e.g., temperature, wind speed, wind direction, mode, etc.) output by the multimodal generation model 508, and input the adjustment parameters to the air conditioning control system for corresponding adjustment.

It can be understood that, to ensure the adjustment parameters generated by the multimodal generation model meet safety requirements and user requirements, the adjustment parameters may be modified by a verification module 510 to determine the adjusted adjustment parameters. The verification module 510 may be configured with multiple verification strategies, such as safety strategies on the basis of vehicle dynamics, user verification strategies on the basis of user configurations, and the like. In some embodiments of the present disclosure, the system may proactively inquire whether the user is satisfied with the adjustment parameters and adjust same according to the adjustment intent of the user.

In this way, intelligent and unified control of the components within the cabin can be achieved. Users only need to express personal requirements via voice input or other means, thereby truly transforming the vehicle into a voice-controlled "smart adaptive space" that provides users with an immersive cockpit atmosphere experience.

In some embodiments of the present disclosure, the vehicle's display screen can display wallpaper images, and different users may have different preferences for wallpaper images. Users prefer the wallpaper images to change in response to the driving scenarios of the vehicle. On this basis, the candidate configuration may comprise image instructions for the wallpaper images. The image instructions are used to specify the requirements for generating wallpaper images. It can be understood that the image instructions are used to generate wallpaper images according to the current scenario, rather than comprising a specific wallpaper image. In some embodiments of the present disclosure, the image instructions may comprise multiple parameters (e.g., theme, color, dynamic effect, etc.) that are used to guide the generation process of the wallpaper images.

In some embodiments of the present disclosure, wallpaper images are classified into dynamic wallpapers that dynamically change, and static wallpaper images. The status of the wallpaper images can be determined according to the current scenario of the vehicle. For example, when the vehicle is in a driving scenario, the surrounding environment (e.g., objects, weather, time, etc. comprised in the surrounding environment) of the vehicle is continuously changing. To provide the user with a corresponding real-time visual experience, wallpaper images can be dynamically generated according to the vehicle's scenario data, allowing the wallpaper images to be displayed dynamically. For example, changes in the surrounding environment can affect aspects of the wallpaper images, such as color, brightness, content, and the like. In one example, if the vehicle is in motion and the outside scene is a sunset, the content of the wallpaper image can be adjusted to an image featuring a beautiful sunset view, matching the changes in the vehicle's surrounding environment. If it suddenly starts raining while the vehicle is in motion, the wallpaper image may become darker or display raindrop effects. These dynamic wallpaper images can be displayed on the display screens inside the vehicle (such as the center control screen, the screen adjacent to the instrument panel, etc.), providing real-time visual enjoyment for occupants.

It can be understood that, to enhance driving safety, adjustments to the wallpaper images are not to distract the driver's attention or obstruct their line of sight. Therefore, when designing and adjusting wallpaper images, it is necessary to consider their effect on driving safety and ensure that during critical moments (such as emergency braking, lane changes, etc.), the wallpaper images do not interfere with the driver's judgment and operation.

In some embodiments of the present disclosure, the current scenario of the vehicle is determined by the multimodal data, which comprises abundant information. Therefore, the materials used to generate the wallpaper images can be determined according to the current scenario. The materials may comprise text materials, graphics and image materials, animation materials, and the like. The text materials refer to text with specific formatting, comprising font, font size, font style, color, and other effects. The image materials refer to materials in the form of images, comprising illustrations, stickers, icons, and the like. For example, when the vehicle is driving on an overpass planted with roses, the roses can be used as materials for generating the wallpaper images, and the generated wallpaper images may comprise roses. It can be understood that the attributes and parameters of the materials can be dynamically adjusted according to real-time changes in the current scenario, thereby achieving dynamic changes in the wallpaper images. In some embodiments of the present disclosure, a material library may be predefined according to user requirements or other factors. The material library comprises multiple types of materials (e.g., icons, text, dynamic effects, etc.). On the basis of the current scenario, materials corresponding to the scenario can be selected from the material library.

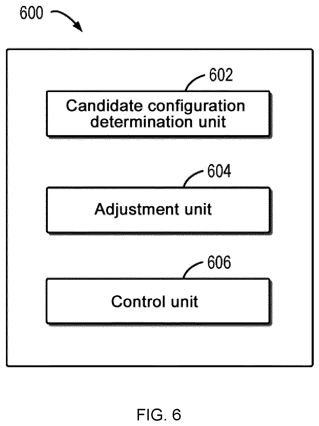

FIG. 6 shows a block diagram of an apparatus 600 for controlling a cabin according to some embodiments of the present disclosure. As shown in FIG. 6, the apparatus 600 comprises a candidate configuration determination unit 602 configured to determine, on the basis of a current scenario of a vehicle, candidate configurations for a plurality of components within the cabin. The apparatus 600 further comprises an adjustment unit 604 configured to adjust the candidate configurations on the basis of safety constraint information of the vehicle and input information from a user. The apparatus 600 further comprises a control unit 606 configured to control, on the basis of the adjusted candidate configurations, corresponding components within the cabin.

In some embodiments, the adjustment unit 604 is further configured to: determine, on the basis of the input information from the user, an adjustment intent of the user; and adjust the candidate configurations on the basis of the safety constraint information and the adjustment intent of the user.

In some embodiments, the adjustment unit 604 is further configured to: determine a component to be adjusted comprised in the adjustment intent and operating parameters of the component to be adjusted; and adjust, on the basis of the operating parameters, a parameter for the component to be adjusted in the safety constraint information.

In some embodiments, the adjustment unit 604 is further configured to: determine a safety constraint value for the component to be adjusted comprised in the safety constraint information; and adjust, in response to an operating parameter for the component to be adjusted comprised in the candidate configurations being greater than the safety constraint value, the operating parameter for the component to be adjusted in the candidate configuration, such that the operating parameter is less than the safety constraint value.

In some embodiments, the apparatus 600 further comprises a preset configuration generation unit, configured to: acquire multimodal data collected by the vehicle in a preset scenario; output, by a multimodal generation model on the basis of the multimodal data of the vehicle, a plurality of parameters for controlling the plurality of components; and determine a preset configuration by encapsulating the plurality of parameters, the preset configuration matching the preset scenario.

In some embodiments, the preset configuration generation unit is further configured to: acquire historical input information and historical adjustment information from the user; and on the basis of the historical input information and the historical adjustment information, output, by the multimodal generation model on the basis of the multimodal data, the plurality of parameters for controlling the plurality of components.

In some embodiments, the adjustment unit 604 is further configured to: acquire environmental sensor data of the vehicle and driving status of the vehicle; determine, on the basis of the environmental sensor data and the driving status, whether a plurality of parameters comprised in the candidate configurations are permitted to be executed; and adjust, in response to the plurality of parameters not being permitted to be executed, the parameters in the candidate configurations.

In some embodiments, the candidate configurations comprise image instructions for generating wallpaper images, and the apparatus 600 further comprises a wallpaper image determination unit, configured to: in response to the image parameters, determine, on the basis of the current scenario, a dynamic condition of the wallpaper images and the number of wallpaper images.

In some embodiments, the wallpaper image determination unit is further configured to: determine, on the basis of the current scenario or driving status of the vehicle, whether the vehicle is in motion; and configure, in response to the vehicle being in motion, the generated wallpaper images to dynamically change according to the current scenario.

In some embodiments, the wallpaper image determination unit is further configured to: determine, on the basis of the current scenario, materials for generating the wallpaper images; and in response to the image instructions, generate and display the wallpaper images on the basis of the materials.

In some embodiments, the apparatus 600 further comprises a scenario determination unit, configured to: acquire surrounding environment information of the vehicle, driving status of the vehicle, and driving operation of the user; and determine the current scenario of the vehicle on the basis of the surrounding environment information, the driving status, and the driving operation.

It is to be understood that, by employing the apparatus 600 of the present disclosure, at least one of many advantages achievable by the methods or processes described above may be achieved.

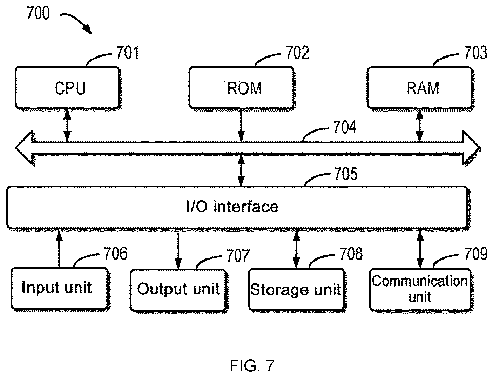

FIG. 7 shows a schematic block diagram of an example device 700 that may be used to implement embodiments of the present disclosure. As shown, the device 700 comprises a computing unit 701 which can perform appropriate actions and processes according to computer program instructions stored in a read-only memory (ROM) 702 or loaded from a storage unit 708 into a random-access memory (RAM) 703. In the RAM 703, programs and data required for the operation of the device 700 may also be stored. The computing unit 701, the ROM 702, and the RAM 703 are mutually connected via a bus 704. An input/output (I/O) interface 705 is also connected to the bus 704.

A plurality of components in the device 700 are connected to the I/O interface 705, comprising: an input unit 706, such as a keyboard, a mouse, and the like; an output unit 707, such as various types of displays, speakers, and the like; a storage unit 708, such as a magnetic disk, an optical disc, and the like; and a communication unit 709, such as a network card, a modem, a wireless communication transceiver, and the like. The communication unit 709 allows the device 700 to exchange information/data with other devices via a computer network such as the Internet and/or various telecommunication networks.

The computing unit 701 may be various general-purpose and/or dedicated processing assemblies having processing and computing capabilities. Some examples of the computing unit 701 include, but are not limited to, a central processing unit (CPU), a graphics processing unit (GPU), various dedicated artificial intelligence (AI) computation chips, various computing units running machine learning model algorithms, a digital signal processor (DSP), and any suitable processor, controller, microcontroller, etc. The computing unit 701 executes the methods and processes described above, such as the method 300. For example, in some embodiments, the method 300 may be implemented as a computer software program that is tangibly comprised in a machine-readable medium, such as the storage unit 708. In some embodiments, part or all of the computer program may be loaded and/or installed onto the device 700 via the ROM 702 and/or the communication unit 709. When the computer program is loaded into the RAM 703 and executed by the computing unit 701, one or more steps of the method 300 described above may be executed. Alternatively, in other embodiments, the computing unit 701 may be configured to execute the method 300 by any other suitable means (e.g., via firmware).

The functions described above herein may be executed at least partially by one or more hardware logic components. For example, without limitation, exemplary types of hardware logic components that can be used comprise: a field-programmable gate array (FPGA), an application-specific integrated circuit (ASIC), an application-specific standard product (ASSP), a system on a chip (SOC), a complex programmable logic device (CPLD), and the like.

The program code for implementing the methods of the present disclosure may be written in any combination of one or more programming languages. The program code may be provided to a processor or controller of a general-purpose computer, a dedicated computer, or other programmable data processing apparatus, so that when the program code is executed by the processor or controller, the functions/operations defined in the flowchart and/or block diagram are implemented. The program code may be executed entirely on a machine, partially on a machine, partially on a machine and partially on a remote machine as a standalone software package, or entirely on a remote machine or server.

In the context of the present disclosure, a machine-readable medium may be a tangible medium that can comprise or store a program for use by, or in conjunction with, an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination thereof. More specific examples of the machine-readable storage medium may comprise an electrical connection on the basis of one or more wires, a portable computer disk, a hard disk, a random-access memory (RAM), a read-only memory (ROM), an erasable programmable read-only memory (EPROM) or flash memory, an optical fiber, a portable compact disc read-only memory (CD-ROM), an optical storage device, a magnetic storage device, or any suitable combination thereof. In addition, although the operations are depicted in a particular order, it is not to be understood as requiring that such operations be performed in the particular order shown or in sequential order, or that all illustrated operations are to be performed to achieve a desired result. Multitasking and parallel processing may be beneficial under certain circumstances. Likewise, although several specific implementation details are comprised in the discussion above, these are not to be construed as limiting the scope of the present disclosure. Certain features described in the context of separate embodiments may also be implemented in combination in a single implementation. Rather, the features described in the context of a single implementation may also be implemented in a plurality of implementations individually or in any suitable sub-combination.

Although the subject matter has been described using language specific to structural features and/or methodological logical actions, it is to be understood that the subject matter defined in the appended claims is not necessarily limited to the specific features or actions described above. Rather, the specific features and actions described above are merely example forms of implementing the claims.

## Claims

1. A method for controlling a cabin, comprising:
determining, on the basis of a current scenario of a vehicle, candidate configurations for a plurality of components within the cabin;
adjusting the candidate configurations on the basis of safety constraint information of the vehicle and input information from a user; and
controlling, on the basis of the adjusted candidate configurations, corresponding components within the cabin.

2. The method according to claim 1, wherein adjusting the candidate configurations on the basis of safety constraint information of the vehicle and input information from a user comprises:
determining, on the basis of the input information from the user, an adjustment intent of the user; and
adjusting the candidate configurations on the basis of the safety constraint information and the adjustment intent of the user.

3. The method according to claim 2, wherein adjusting the candidate configurations comprises:
determining a component to be adjusted comprised in the adjustment intent and configuration information of the component to be adjusted; and
adjusting, on the basis of the configuration information, a configuration for the component to be adjusted in the candidate configurations.

4. The method according to claim 2, wherein adjusting the candidate configurations comprises:
determining a safety constraint value for a component to be adjusted comprised in the safety constraint information; and
adjusting, in response to a configuration for the component to be adjusted comprised in the candidate configurations being greater than the safety constraint value, the configuration for the component to be adjusted, such that the adjusted configuration is less than the safety constraint value.

5. The method according to claim 1, further comprising:
acquiring multimodal data collected by the vehicle in a preset scenario;
outputting, by a multimodal generation model on the basis of the multimodal data of the vehicle, a plurality of parameters for controlling the plurality of components; and
determining a preset configuration by encapsulating the plurality of parameters, the preset configuration matching the preset scenario.

6. The method according to claim 5, wherein outputting a plurality of parameters for controlling the plurality of components comprises:
acquiring historical input information and historical adjustment information from the user; and
on the basis of the historical input information and the historical adjustment information, outputting, by the multimodal generation model on the basis of the multimodal data, the plurality of parameters for controlling the plurality of components.

7. The method according to claim 1, wherein adjusting the candidate configurations comprises:
acquiring environmental sensor data of the vehicle and driving status of the vehicle;
determining, on the basis of the environmental sensor data and the driving status, whether a plurality of parameters comprised in the candidate configurations are permitted to be executed; and
adjusting the candidate configurations in response to the plurality of parameters not being permitted to be executed.

8. The method according to claim 1, wherein the candidate configurations comprise image instructions for generating wallpaper images, and the method further comprises:
in response to the image instructions, determining, on the basis of the current scenario, a dynamic condition of the wallpaper images and the number of wallpaper images.

9. The method according to claim 8, wherein determining, on the basis of the current scenario, a dynamic condition of the wallpaper images comprises:
determining, on the basis of the current scenario or driving status of the vehicle, whether the vehicle is in motion; and
configuring, in response to the vehicle being in motion, the generated wallpaper images to dynamically change according to the current scenario.

10. The method according to claim 8, further comprising:
determining, on the basis of the current scenario, materials for generating the wallpaper images; and
in response to the image instructions, generating and displaying the wallpaper images on the basis of the materials.

11. The method according to claim 1, further comprising:
acquiring surrounding environment information of the vehicle, driving status of the vehicle, and driving operation of the user; and
determining the current scenario of the vehicle on the basis of the surrounding environment information, the driving status, and the driving operation.

12. An apparatus for controlling a cabin, comprising:
a candidate configuration determination unit, configured to determine, on the basis of a current scenario of a vehicle, candidate configurations for a plurality of components within the cabin;
an adjustment unit, configured to adjust the candidate configurations on the basis of safety constraint information of the vehicle and input information from a user; and
a control unit, configured to control, on the basis of the adjusted candidate configurations, corresponding components within the cabin.

13. An electronic device, comprising:
at least one processor; and
a memory, coupled to the at least one processor and having instructions stored thereon which, when executed by the at least one processor, cause the device to execute the method according to any one of claims 1-11.

14. A vehicle, comprising a plurality of sensors and the electronic device according to claim 13.

15. A computer program product, tangibly stored on a computer-readable medium and comprising machine-executable instructions which, when executed, implement the method according to any one of claims 1-11.
